# EUROPÄISCHE PATENTSCHRIFT

(11) **EP 0 469 478 B1**
(45) Veröffentlichungstag und Bekanntmachung des Hinweises auf die Patenterteilung: **01.12.1993**
(21) Anmeldenummer: 91112583.9
(22) Anmeldetag: 26.07.1991
(51) Int. Cl.: B60T 8/18

(54) **Vorrichtung zur lastabhängigen Regelung des Bremsdruckes an den Achsen eines Doppelachsaggregates eines Fahrzeuges**
Device for the load dependent brake pressure control on the axles of a tandem axle bogie of a vehicle
Dispositif pour le réglage en fonction de la charge, de la pression de freinage aux essieux d'un ensemble d'essieux en tandem d'un véhicule

(30) Priorität: 02.08.1990 DE 4024503
(43) Veröffentlichungstag der Anmeldung: 05.02.1992
(73) Patentinhaber: Iveco Magirus Aktiengesellschaft, D-89017 Ulm (DE)
(72) Erfinder: Baur, Franz, W-7959 Stetten (DE)
(74) Vertreter: TER MEER STEINMEISTER & PARTNER GbR

(56) Entgegenhaltungen:
- DE-A- 1 430 498
- DE-A- 3 322 702
- DE-B- 1 183 814
- SOVIET INVENTIONS ILLUSTRATED Section P/Q, week 9012, 02 May 1990. Derwent Publications Ltd., London GB.

## Beschreibung

Die Erfindung betrifft eine Vorrichtung zur lastabhängigen Regelung des Bremsdrucks an der ersten und der zweiten Achse eines Fahrzeug-Doppelachsaggregats mittels eines fahrzeugfesten Regelventils gemäß Oberbegriff des Patentanspruchs 1.

Aus DE-A-33 22 702 ist eine Bremsdruckregelvorrichtung der vorgenannten Art bekannt, bei der der Federweg beim Ein- und Ausfedern der ersten und zweiten Fahrzeugachse je nach Beladungszustand als Steuerweg für den Bremsskraftregler bzw. das Regelventil verwendet wird. Der Bremskraftregler steuert je nach Steuerweg immer den Bremsdruck aus, mit dem die erforderliche Abbremsung für die jeweilige Achslast erreicht wird. Dies gilt generell für den normalen Fahrbetrieb, insbesondere bei den dann auftretenden pendelbewegungen der ersten und der zweiten Achse. Bei besonderen Fahrsituationen kommt es jedoch zu einem totalen Verlust des Federweges durch Absinken der zweiten Achse, beispielsweise bei einer frei in einer Grube hängenden zweiten Hinterachse, während die erste Hinterachse des Doppelachsaggregates noch Bodenberührung besitzt. Für derartige Fahrzustände ist die bekannte Regelvorrichtung nicht geeignet.

Aufgabe der Erfindung ist die Verbesserung des vorgenannten Stands der Technik durch Schaffung einer Bremsdruckregelvorrichtung der eingangs genannten Art, welche bei einfachem, kompaktem Aufbau auch bei Verlust des Federweges durch Absinken der zweiten Fahrzeugachse eine zufriedenstellende Bremsdruckregelung der ersten Fahrzeugachse ermöglicht.

Gelöst wird die der Erfindung zugrundeliegende Aufgabe durch die im Anspruch 1 angegebenen Merkmale.

Vorteilhaft weitergebildet wird der Erfindungsgegenstand durch die Merkmale der Unteransprüche 2 bis 9.

Wesen der Erfindung ist die Ausbildung einer speziellen Ausgleichsvorrichtung an der Geberstange, die bei einer frei hängenden zweiten Fahrzeugachse den Reglerhebel des Regelventils in einer Regelstellung hält oder eine bremsdruckverstärkende Verstellung des Reglerhebels vornimmt.

Die Ausgleichsvorrichtung umfaßt eine an der Geberstange angelenkte Wippe, deren anderes Ende mit einer Steuerstange des Reglerhebels gelenkig verbunden ist.

Die Wippe ist zwischen ihren Anlenkstellen gelenkig mit einer Haltestange verbunden, deren anderes Ende an der Konsole der ersten Fahrzeugachse befestigt ist, wobei die Befestigungsstelle an der Konsole eine Eingangsbohrung vorsieht, durch die sich die Haltestange verschieblich mit Spiel erstreckt, und die Haltestange jenseits der Durchgangsbohrung einen erweiterten Endanschlag besitzt, vorzugsweise in Form einer Stellschraube.

Die Haltestange ist in Richtung Wippe durch eine (Druck-)Feder vorgespannt und vorzugsweise über ein Kugelgelenk mit der Wippe verbunden.

Zweckmäßigerweise weist die Wippe auf der der Haltestange abgewandten Seite einen zweiten vorzugsweise verstellbaren Endanschlag auf, welcher insbesondere als Keil ausgebildet ist, der auf der Geberstange in dichter Nachbarschaft zur Anlenkstelle der Wippe angeordnet ist.

Die Wippe ist etwa mittig an der Geberstange angelenkt.

Wippe, Haltestange, Steuerstange und Regler liegen in etwa in einer Vertikalebene der Geberstange.

Durch die Erfindung wird also vermieden, daß der bei einem Absinken bzw. bei einem freien Hängen der zweiten Fahrzeugachsein jedem Beladungszustand verlorengegangene Federweg durch eine spezielle Ausgleichsvorrichtung zumindest ausgeglichen wird, d.h. der Steuerweg für den Bremskraftregler erhalten bleibt (oder gegebenenfalls sogar verstärkt wird). Durch die verschiedenen Anlenkpunkte der Haltestange an der ersten Fahrzeugachse und die verschiedenen Hebelarme der Wippe können beim Absinken der zweiten Achse beliebige Steuerwege für den Bremskraftregler eingerichtet werden. Von Vorteil ist der geringe Verschleiß der Regelvorrichtung bei einem Betrieb, da sich die Wippe beim normalen Ein- und Ausfedern sowie bei einem Pendeln nach vorne nicht bewegt. Bei einem Pendeln nach hinten wird je nach Einstellung der Haltestange die Wippe angehoben und gleicht den Steuerweg aus. Von Vorteil ist ferner, daß für die Geberstange bzw. für ein aufwendiges Reglergestänge kein seitlicher Freiraum notwendig ist. Da das Reglergestänge vergleichsweise einfach und kompakt gestaltet werden kann, genügt ein geringer Einbauraum. Eine genaue Abnahme des Steuerungsweges für den Bremskraftregler in jedem Beladungszustand ist gegeben.

Die Erfindung wird nachfolgend anhand eines Ausführungsbeispiels unter Bezugnahme auf die beigefügte Zeichnung näher erläutert; es zeigen:
- Fig. 1: eine Bremsdruckregelvorrichtung mit Ausgleichsvorrichtung in einem Doppelachsaggregat in schematischer Teilseitenansicht, wobei das Fahrzeug beladen ist und die zweite Fahrzeugachse frei hängt,
- Fig. 2: eine Anordnung nach Fig. 1 bei normal betriebenem beladenem Fahrzeug, d.h. ohne frei durchhängende zweite Achse, und
- Fig. 3: eine Anordnung nach Fig. 2 bei unbeladenem Fahrzeug.

In der Zeichnung sind die erste Achse (21) und die zweite Achse (22) eines Doppelachsaggregates eines Nutzfahrzeuges dargestellt, die über bekannte Lenker am Fahrzeugrahmen in einer Weise angelenkt sind, daß Ein- und Ausfederbewegungen und Pendelbewegungen eines Fahrzeugfahrbetriebsermöglicht sind.

Erste Achse (21) und zweite Achse (22) sind blattgefedert und besitzen eine Blattfeder (14) mit einem etwa mittigen Federlager (11). Zwischen erster und zweiter Achse ist eine Geberstange (4) angelenkt. Insbesondere ist die Geberstange (4) über ein Kreuzgelenk (8) an der Konsole (7) der ersten Achse (21) angelenkt. Das andere Ende der Geberstange (4) besitzt einen Federungskörper (15), welcher auf der Konsole der zweiten Achse (22) befestigt ist.

Am Fahrzeugrahmen (24) ist ein Bremskraftregelventil (16) befestigt, wobei der Reglerhebel (5) über ein Kugelgelenk (2) mit einer Steuerstange (3) und letzte über ein Kugelgelenk (2) mit einer Wippe (13) verbunden ist. Das andere Ende der Wippe (13) ist über eine Anlenkstelle (12) etwa mittig an der Geberstange (4) angelenkt, die Teil einer Ausgleichsvorrichtung ist, welche bei frei durchhängender zweiter Fahrzeugachse (22) den Reglerhebel (5) in seiner momentan eingestellten Bremsdruckregelstellung hält, wie dies nachfolgend noch beschrieben wird.

Die Wippe (13) besitzt zwischen ihren Anlenkstellen (12 und 2) eine weitere Anlenkstelle in Form eines Kugelgelenks, welche dem einen Ende einer Haltestange (10) zugeordnet ist, dessen anderes Ende über eine Befestigungsstelle (19) mit der Konsole (7) der ersten Fahrzeugachse (21) befestigt ist.

Insbesondere sieht die Befestigungsstelle (19) eine Durchgangsbohrung bei der Konsole (7) vor, durch welche sich das der Wippe (13) abgewandte Ende der Haltestange (10) mit Spiel verschieblich erstreckt. Die Haltestange (10) besitzt jenseits der Durchgangsbohrung einen erweiterten Endanschlag (23) in Form einer stufenlos verstellbaren Schraube, welche gesichert ist.

Auf der Konsole (7) stützt sich eine Druckfeder (9) ab, welche die Haltestange (10) in Richtung Wippe (13) vorspannt.

Die Wippe (13) weist auf der der Haltestange (10) abgewandten Seite einen Wippen-Endanschlag (6) auf, welcher in dichter Nachbarschaft zur Anlenkstelle (12) auf der Geberstange angeordnet und insbesondere als Keil ausgebildet ist. Der Keilwinkel ist einstellbar.

Die Anordnung Wippe (13), Haltestange (10), Steuerstange (3), Reglerhebel (5) und Regelventil (16) ist so getroffen, daß sie in etwa in einer Vertikalebene oberhalb der Geberstange (4) in einem schmalen Bereich liegt, so daß wenig Einbauraum benötigt wird.

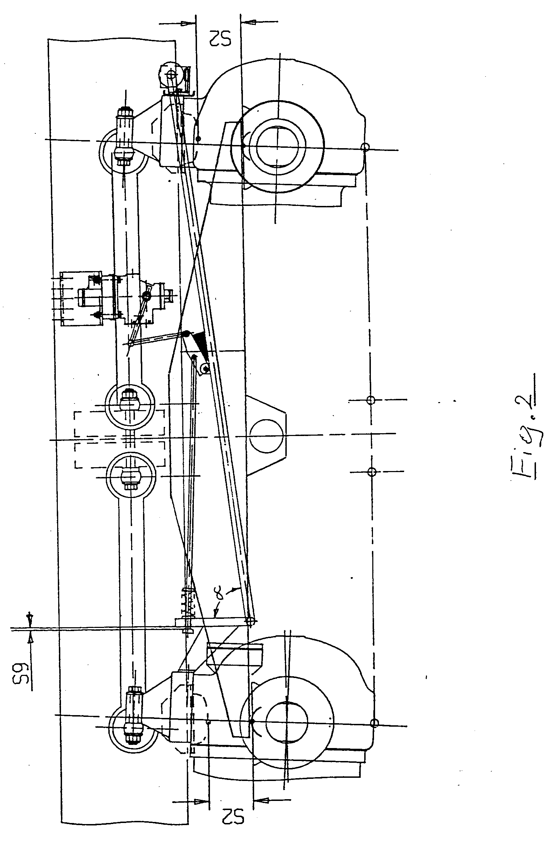

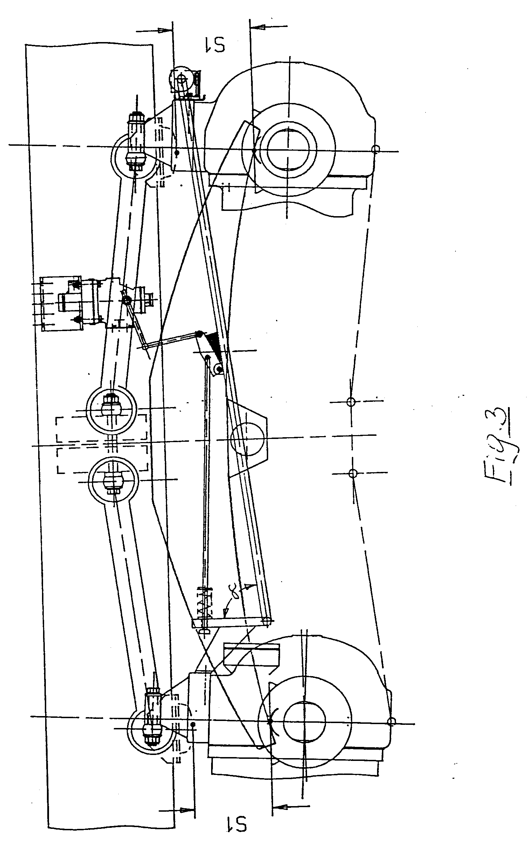

Bei einem Normalbetrieb eines Fahrzeugs sind erste Achse (21) und zweite Achse (22) in einem Bodenkontakt. Die Pendelachse des Doppelachsaggregates steuert über die Geberstange (4) und die Steuerstange (3) den entsprechenden Bremsdruck durch das fahrzeugfeste Regelventil (16) ein. Entsprechend ist der Reglerhebel (5) bei unbeladenem Fahrzeug gemäß Fig. 3 und bei beladenem Fahrzeug gemäß Fig. 2 unterschiedlich hinsichtlich seines Winkels verstellt. Die Wippe (13) liegt hierbei durch die Kraft der Druckfeder (9) und die auf Druck beanspruchte Haltestange (10) am zugeordneten Endanschlag (6) an.

Bei vorgenanntem Normalbetrieb eines beladenen oder unbeladenen Fahrzeugs verhalten sich Geberstange (4), Wippe (13), Haltestange (10) wie ein starres Gebilde und sind bezüglich der Beeinflussung einer Verstellung des Reglerhebels unwirksam. Die Doppelachse besitzt bei beladenem Fahrzeug gemäß Fig. 2 einen Pendelweg (S2) und bei unbeladenem Fahrzeug gemäß Fig. 3 einen größeren Pendelweg (S1). Der erweiterte Endanschlag (23) jenseits der Durchgangsbohrung der Befestigungsstelle (19) besitzt hierbei ein Spiel (S9) bezüglich der Konsole (7) (vgl. Fig. 2).

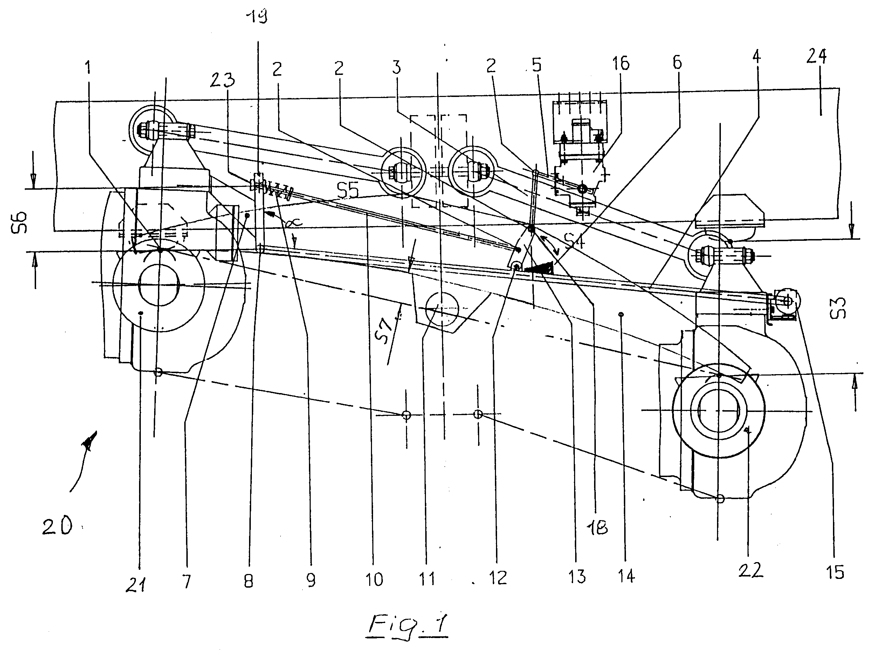

Fährt nun ein Fahrzeug rückwärts beispielsweise mit der zweiten Hinterachse (21) in eine Grube, so daß diese frei zu hängen kommt, nimmt die Pendelachse die in Fig. 1 gezeigte Stellung bei einem beladenen Fahrzeug ein, bei der die zweite Achse (22) eine Auslenkbewegung (S3) erfährt, während die erste Achse (21) am Endanschlag (1) für die erste Achse (21) anliegt. Durch die an der Konsole (7) der ersten Achse (21) befestigte Haltestange (10) wird nunmehr trotz Absenkung der Geberstange (4) gemäß Fig. 1 die Wippe (13)
vom zugeordneten Endanschlag (6) um die Strecke (S4) abgehoben, so daß die Steuerstange (3) im wesentlichen in ihrer Höhenlage bleibt und mithin keine Verstellung des Reglerhebels (5) bewirkt, so daß der eingesteuerte Bremsdruck trotz frei hängender zweiter Achse erhalten bleibt.

Auf der Geberstange (4), die zwischen den beiden Hinterachsen befestigt ist, ist mittig also die Wippe (13) gelagert, die mittels der zugbeanspruchten Haltestange (10) aufgerichtet wird. Der Weg für die zugbeanspruchte Haltestange (10) kommt durch das Absinken der zweiten Hinterachse zustande, da gleichzeitig eine Winkelverschiebung zwischen der ersten und zweiten Achse stattfindet und so im stetigen Verhältnis die Wippe auf der Geberstange (4) aufrichtet. Auf diese Weise wird der verlorene Steuerweg im Verhältnis zum Absinken der zweiten Achse (22) ausgeglichen.

Eine Veränderung des Steuerweges für den Bremskraftregler findet also im Bereich des Pendelweges nach vorn nicht statt. Fährt jedoch das Fahrzeug rückwärtig in eine Grube, übernimmt die erste Achse (21) die gesamte Last, während die zweite Achse (22) durchhängt, und gleichwohl der Steuerweg für den Bremskraftregler ausgeglichen wird. Der Ausgleich des Steuerweges erfolgt durch Öffnung des Winkels α . Dadurch verlängert sich der Weg der Haltestange (10), wodurch die Wippe je nach Höhe (S6) der Befestigungsstelle (19), dem Haltestangenspiel (S9) sowie dem Hebelarm an der Wippe (13) aufgerichtet wird. Durch die verschiedenen Anlenkungspunkte und Hebelarme (S6, S9) und dem Hebelarm der Wippe (13) können verschiedene Aufrichtwege (S4) der Wippe erzeugt werden.

## Patentansprüche

1. Vorrichtung (20) zur lastabhängigen Regelung des Bremsdrucks an der ersten und der zweiten Achse (21, 22) eines Fahrzeug-Doppelachsaggregats, mit einem fahrzeugfesten Regelventil (16), das über eine an beiden Achsen (21, 22) angelenkte Geberstange (4) steuerbar ist, wobei die Geberstange (4) eine Ausgleichsvorrichtung aufweist, die bei der zweiten Fahrzeugachse (22) den Reglerhebel (5) des Regelventils (16) in seiner Regelstellung halten oder eine bremsdruckverstärkende Verstellung des Reglerhebels (5) vornehmen kann,
dadurch gekennzeichnet,
daß die Ausgleichsvorrichtung eine an der Geberstange (4) angelenkte Wippe (13) umfaßt, deren anderes Ende (18) mit einer Steuerstange (3) des Reglerhebels (5) gelenkig verbunden ist, die Wippe (13) zwischen ihren Anlenkstellen (12, 18) gelenkig mit einer Haltestange (10) verbunden ist, deren anderes Ende an der Konsole (7) der ersten Fahrzeugachse (21) befestigt ist, die Befestigungsstelle (19) der Haltestange (10) an der Konsole (7) der ersten Fahrzeugachse (21) eine Durchgangsbohrung vorsieht, durch die sich die Haltestange (10) verschieblich mit Spiel erstreckt, und die Haltestange (10) jenseits der Durchgangsbohrung einen erweiterten Endanschlag (23) besitzt.

2. Vorrichtung nach Anspruch 1,
dadurch gekennzeichnet,
daß der erweiterte Endanschlag (23) durch eine Stellschraube gebildet ist.

3. Vorrichtung nach Anspruch 1,
dadurch gekennzeichnet,
daß die Haltestange (10) in Richtung Wippe (13) durch eine Feder (9) vorgespannt ist.

4. Vorrichtung nach einem der Ansprüche 1 bis 3,
dadurch gekennzeichnet,
daß die Haltestange (10) über ein Kugelgelenk (2) mit der Wippe (13) verbunden ist.

5. Vorrichtung nach einem der Ansprüche 1 bis 4,
dadurch gekennzeichnet,
daß die Wippe (13) auf der der Haltestange (10) abgewandten Seite einen Endanschlag (6) aufweist.

6. Vorrichtung nach Anspruch 5,
dadurch gekennzeichnet,
daß der Wippen-Endanschlag (6) einstellbar ist.

7. Vorrichtung nach Anspruch 5 oder 6,
dadurch gekennzeichnet,
daß der Wippen-Endanschlag (6) ein Keil ist, welcher auf der Geberstange (4) in dichter Nachbarschaft zur Anlenkstelle (12) der Wippe (13) angeordnet ist.

8. Vorrichtung nach einem der Ansprüche 1 bis 7,
dadurch gekennzeichnet,
daß die Wippe (13) etwa mittig an der Geberstange (4) angelenkt ist.

9. Vorrichtung nach einem der Ansprüche 1 bis 8,
dadurch gekennzeichnet,
daß Wippe (13), Haltestange (10), Steuerstange (3) und Regelventil (16) in etwa in einer Vertikalebene der Geberstange (4) liegen.

## Claims

1. Device (20) for the load-dependent regulation of the brake pressure on the first and second axles (21, 22) of a vehicle tandem axle unit, having a vehicle-fixed regulating valve (16), which can be controlled via a transmitter rod (4) articulated on both axles (21, 22), the transmitter rod (4) exhibiting an equalising device which, in the case of the second vehicle axle (22), can hold the regulator lever (5) of the regulating valve (16) in its regulating position or can perform a brake pressure-intensifying adjustment of the regulator lever (5), characterised in that the equalising device comprises a rocker (13), which is articulated on the transmitter rod (4) and the other end (18) of which is articulated on a control rod (3) of the regulator lever (5), in that the rocker (13) is articulated, between its articulation points (12, 18), on a holding rod (10), the other end of which is fastened to the bracket (7) of the first vehicle axle (21), in that the fastening point (19) of the holding rod (10) on the bracket (7) of the first vehicle axle (21) provides a pass-through bore, through which the holding rod (10) extends displaceably with play, and in that the holding rod (10) possesses, on the far side of the pass-through bore, an enlarged end stop (23).

2. Device according to Claim 1, characterised in that the enlarged end stop (23) is formed by an adjusting screw.

3. Device according to Claim 1, characterised in that the holding rod (10) is pre-tensioned in the direction of the rocker (13) by a spring (9).

4. Device according to one of Claims 1 to 3, characterised in that the holding rod (10) is connected via a ball joint (2) to the rocker (13).

5. Device according to one of Claims 1 to 4, characterised in that the rocker (13) exhibits, on the side facing away from the holding rod (10), an end stop (6).

6. Device according to Claim 5, characterised in that the rocker end stop (6) is adjustable.

7. Device according to Claim 5 or 6, characterised in that the rocker end stop (6) is a wedge, which is disposed on the transmitter rod (4) in close proximity to the articulation point (12) of the rocker (13).

8. Device according to one of Claims 1 to 7, characterised in that the rocker (13) is articulated approximately centrally on the transmitter rod (4).

9. Device according to one of Claims 1 to 8, characterised in that rocker (13), holding rod (10), control rod (3) and regulating valve (16) are situated approximately in a vertical plane of the transmitter rod (4).

## Revendications

1. Dispositif (20) de réglage de la pression de freinage des premier et second essieux (21, 22) d'un groupe d'essieux jumelés de véhicule en fonction de la charge, comprenant un distributeur de réglage (16) monté en position fixe sur le véhicule et commandé par une barre de transmission (4) articulée sur les deux essieux (21, 22), la barre de transmission (4) comprenant un dispositif de compensation qui maintient le levier (5) du distributeur (16) de réglage à sa position de réglage à proximité du second essieu (22) du véhicule ou qui peut procéder à un déplacement du levier (5) du régulateur qui amplifie la pression de freinage, caractérisé en ce que le dispositif de compensation comprend une bascule (13) articulée sur la barre de transmission (4) et dont l'autre extrémité (18) est reliée par articulation à une barre (3) de commande du levier (5) du régulateur, la bascule (13) étant reliée entre ses points d'articulation (12, 18) par une articulation à une barre de retenue (10) dont l'autre extrémité est montée sur la console (7) du premier essieu (21) du véhicule, le point de montage (19) de la barre de retenue (10) sur la console (7) du premier essieu (21) du véhicule comportant un trou de traversée par lequel passe avec jeu la barre de retenue (10) de manière qu'elle puisse s'y déplacer et la barre de retenue (10) comportant une butée de fin de course élargie (23) au-delà du trou de traversée.

2. Dispositif selon la revendication 1, caractérisé en ce que la butée de fin de course élargie (23) est formée d'une vis de réglage.

3. Dispositif selon la revendication 1, caractérisé en ce que la barre de retenue (10) est mise sous précontrainte par un ressort (9) vers la bascule (13).

4. Dipositif selon l'une des revendications 1 à 3, caractérisé en ce que la barre de retenue (10) est reliée à la bascule (13) par une articulation à rotule (2).

5. Dispositif selon l'une des revendications 1 à 4, caractérisé en ce que la bascule (13) comporte une butée de fin de course (6) du côté tourné à l'opposé de la barre de retenue (10).

6. Dispositif selon la revendication 5, caractérisé en ce que la butée de fin de course (6) de la bascule est réglable.

7. Dispositif selon la revendication 5 ou 6, caractérisé en ce que la butée de fin de course (6) de la bascule est un coin qui est disposé sur la barre de transmission (4) au voisinage immédiat du point d'articulation (12) de la bascule (13).

8. Dispositif selon l'une des revendications 1 à 7, caractérisé en ce que la bascule (13) est articulée sur la barre de transmission (4) à peu près au milieu de celle-ci,

9. Dispositif selon l'une des revendications 1 à 8, caractérisé en ce que la bascule (13), la barre de retenue (10), la barre de commande (3) et le distributeur de réglage (16) sont situés à peu près dans un plan vertical dans lequel se trouve la barre de transmission (4).
